# EUROPEAN PATENT APPLICATION

(11) **EP 0 729 821 A2**
(43) Date of publication of application: **04.09.1996**
(21) Application number: 96300874.3
(22) Date of filing: 09.02.1996
(51) Int. Cl.: B29C 45/54, B29C 45/47

(54) **Plasticizing and injection moulding mechanism and method**

(30) Priority: 28.02.1995 JP 40586/95; 11.09.1995 JP 232353/95
(71) Applicant: TUOIS K.K., Adachi-Gun, Fukushima-Ken (JP)
(72) Inventor: Shibata, Tooru, c/o Tuois K.K. 14-1 Aza-Idogami, Adachi-gun, Fukushima-ken (JP)
(74) Representative: Parry, Christopher Stephen

(57) **Abstract**

A plasticizing and injecting mechanism and method in an injection moulding machine, in which there are provided: a barrel (1) that is formed with a bore (1s) contoured in the form of a rotary body, an injection cylinder (2) that is coupled with the barrel coaxially therewith, a screw (6) that is adapted to be in an abutting engagement with the barrel bore (1s) and retained therein so as to be capable of an axial rotation and that is formed with a screw channel (7), and an injection plunger (8) that is incorporated into the screw,
the bore (1s) of the barrel (1) and the the screw being each configured to be in a conical form and
the screw channel being configured to have an angle of inclination θ passing through a succession of ridge portions (7p) thereof and an angle of inclination α passing through a succession of valley portions (7v) thereof which are not identical to each other.

Also, the screw (6) can be formed with not less than two varied angles of inclination in a combination and in a stepwise manner. the barrel bore (1s) being configured to conform to such a screw (6).

## Description

The present invention relates to a plasticizing and injecting mechanism and method for an injection moulding machine. More particularly, it is concerned with a plasticizing and injecting mechanism and method in an injection moulding machine in which a bore in a barrel means and a screw means adapted to be in an abutting engagement with the bore are each configured to be contoured in the form of a rotary body which is other than a cylindrical body. The present invention is also related to a product made by an plasticizing and injecting method as described in an injection molding machine.

In an attempt to overcome the disadvantages of an injection moulding machine that utilizes an in-line screw system or a screw preplastication/plunger injection system, there has hitherto existed a plasticizing and injecting mechanism in which an injection plunger is incorporated into the screw coaxially therewith (see, e. g., Japanese Unexamined Utility Model Publication No. S63-189,618 and Japanese Unexamined Patent Publication No. H02-164,511).

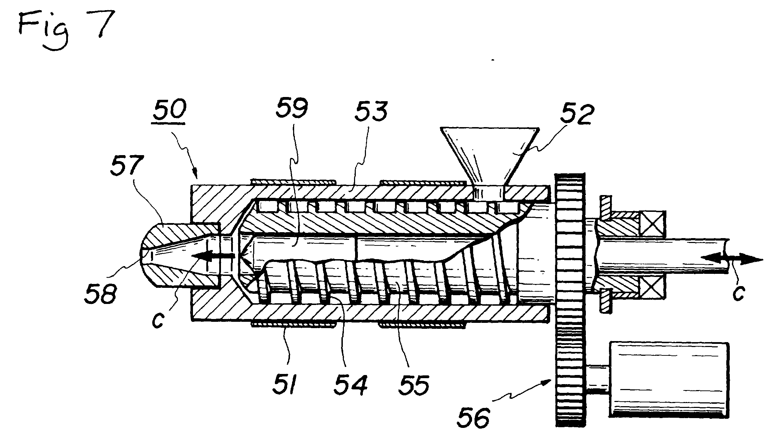

In such a plasticizing and injection mechanism or assembly, there has primarily been adopted a construction which is set out below with reference to Fig. 7 of the accompanying drawings. Specifically, the mechanism or assembly 50 is exteriorly provided with a heating means 51 such as a belt heater and is formed with a hollow cylindrical barrel 53 that is provided with a hopper 52 for supplying a plasticizable material (i. e. an injection mouldable material) from an external source. Within this barrel 53, a screw 55 is provided in a suitable abutting engagement with a bore formed therein, the screw 55 being formed over its entire peripheral side surface with a screw channel 54 and being retained in the bore so as to be axially rotatable therein. The screw 55 is so constructed that it may be rotated by a rotary drive mechanism 56 to allow the barrel 53 to be suitably rotated axially at a fixed position.

Also, at a forward end side of the barrel 53 there is arranged an injection cylinder 57 with an axis that is coincident with the rotary axis of the screw 55, the injection cylinder 57 having its forward end formed with an injection nozzle 58.

Further, a cylindrical rod-like injection plunger 59 is incorporated slidably into the screw 55 coaxially therewith and has towards its forward end side such a construction that the plunger 59, as it is exposed from the inside of the screw 55, may be capable of an advancing and retracting movement (hereinafter referred to "an advance and retreat movement" in the direction shown by the arrow c) into and out of the injection cylinder 57 by means of a sliding drive mechanism (not shown).

In the construction mentioned above, an injection mouldable material (that is a resinous material in a solid and particulate form), when charged from the hopper 52 into the barrel 53, will be melted therein by a frictional heat due to the molecular shearing that is generated by the rotation of the screw 55 and by a heat that is transferred from the heating means 51. The molten material will then be trusted forwards (towards the forward end portion) under a force of conveyance that is produced by the rotation of the screw channel 54. The molten material conveyed in this way will once be stored within the injection cylinder 57. Then, when a predetermined amount of the molten material is reached within the injection cylinder 57, the rotation of the screw 55 will be ceased, whereafter the injection plunger 59 will be advanced into the injection cylinder 57 to force the molten material to be injected through the outlet nozzle 58 into a cavity (that is, a moulding die or forming mould not shown).

In such a mechanism, however, it has been dicovered that since the screw 55 is linearly shaped (cylindrical), where, for example, a certain resinous material, such as an oil containing resin, polyamide, poly-buthylene terephthalate or polyethylene terephthalate, which has a low viscosity, is to be injection moulded, the problem is encountered that the molten resinous material tends to be dragged so that its forward conveyance may be made incapable to achieve. This undesirable behaviour of a molten resinous material has often be referred to as a "slipping phenomenon".

By the way, in order to secure, for a molten resinous material, a force of conveyance that is produced by the rotation of a screw channel within a barrel, it has been found that the relationship is required that [a force of friction acting between the molten resinous material and the inner wall of the barrel in its circumferential direction, that is, the frictional force for the barrel Tb] is more than [a force of friction acting between the molten resinous material and the outer peripheral wall of the screw in its circumferential direction, that is, the frictional force for the screw Ts]. It may thus be said that the greater the frictional force for the barrel Tb, the better the result which can ensue and that the smaller the frictional force for the screw Ts, the greater the force of conveyance that can be obtained.

With a conventional lineally shaped (or cylindrical) screw, however, it is to be noted that since the direction in which the force of conveyance (the force that acts to push the molten resinous material forwards) could act was parallel to the inner wall of the barrel, it was difficult for a component of the force to be generated in a perpendicular direction. As a result, it follows in the actual circumstances that there was no substantial difference between the two frictional forces Tb and Ts and that the molten resinous material was therefore left in a state in which it was slipped in a same position. Stated in other words, the situation here was similar to the situation in which where there is no force that can restrain the rotation of a nut that is meshed with a screw, it follows that it can only be rotated at its initial thread position and cannot be displaced in its advance direction.

Accordingly, it is an important object of the present invention to overcome the conventional problems mentioned above. A concomitant object of the present invention is to provide a new and advanced plasticizing and injecting mechanism and method which are capable of rendering an injection moulding machine more compact while properly meeting with a wide variety of materials for injection moulding. It is a further object of the present invention to provide a new and improved product that is made by the new and advanced plasticizing and injecting method in an injection moulding machine. It is a still further object of the present invention to provide an injection moulding machine that incorporates a new and advanced plasticizing and injecting mechanism.

In order to achieve the objects mentioned above, there is provided in accordance with the present invention in a first structural aspect thereof, a plasticizing and injecting mechanism for an injection moulding machine, which comprises: a barrel means that has at a rear end side portion thereof a feed inlet means for supplying into it a material to be injection moulded and that is formed with a bore contoured in the form of a rotary body, an injection cylinder means that is so arranged as to extend from a forward end of the said barrel means coaxially therewith and that is formed with an outlet nozzle means at a forward end portion thereof, a screw means that is adapted to be in an abutting engagement with the said bore of the said barrel means and retained in the said bore so as to be capable of an axial rotation therein and that is formed with a screw channel means on a side peripheral surface thereof, and an injection plunger means that is adapted to be incorporated slidably in the said screw means and to be disposed coaxially therewith and that has a forward end portion which is capable of an advance and retreat movement into and out of said injection cylinder means, characterized in that the said bore in the said barrel means and the said screw means adapted to be in the abutting engagement therewith are each configured so as to be contoured in the form of a rotary body which is reduced in diameter towards a forward end thereof, and the said screw channel means is so configured that an angle of inclination of a generatrix passing through a succession of ridge portions thereof may not be identical to an angle of inclination of a generatrix passing through a succession of valley portions thereof.

In accordance with a second structural aspect of the present invention, a plasticizing and injecting mechanism for an injection moulding machine is characterized in that the said bore in the said barrel means and the said screw means adapted to be in the abutting engagement therewith are each configured so as to be contoured in a conical or truncated conical form which is reduced in diameter towards a forward end thereof, and the said screw channel means is so configured that an angle of inclination of a generatrix passing through a succession of ridge portions thereof may not be identical to an angle of inclination of a generatrix passing through a succession of valley portions thereof.

In accordance with a third structural aspect of the present invention, a plasticizing and injecting mechanism for an injection moulding machine is characterized in that the said bore in the said barrel means and the said screw means adapted to be in the abutting engagement therewith are each configured so as to be contoured in the form of a rotary body which is reduced in diameter towards a forward end thereof, and the said screw channel is so configured that an angle of inclination at a generatrix passing through a succession of valley portions thereof may be constituted by a combination of not less than two varied angles of inclination and that said varied angles may be set in a stepwise manner from a given generatrix position.

In accordance with a fourth structural aspect of the present invention, a plasticizing and injecting mechanism for an injection moulding machine is characterized in that the said bore in the said barrel means and the said screw means adapted to be in the abutting engagement therewith are each configured so as to be contoured in the form of a rotary body which is reduced in diameter towards a forward end thereof, the said screw channel means is so configured that an angle of inclination of a generatrix passing through a succession of ridge portions thereof may be constituted by a combination of not less than two varied angles of inclination and that said varied angles may be set in a stepwise manner from a given generatrix position, and the said bore in the said barrel means is configured to be in an abutting engagement with the said screw means so as to conform to said varied taper angles of inclination.

In accordance with a fifth structural aspect of the present invention, a plasticizing and injecting mechanism for an injection moulding machine is characterized in that the said bore in the said barrel means and the said screw adapted to be in the abutting engagement therewith are each configured to have a rotary paraboloidal surface.

In accordance with a six structural aspect of the present invention, a plasticizing and injecting mechanism for an injection moulding machine is characterized in that the said bore in the said barrel means and the said screw means adapted to be in the abutting engagement therewith are each configured to have a rotary hyperbloidal surface.

The present invention also provide, in a first methodical aspect thereof, a plasticizing and injection method for an injection moulding machine, in which there are provided: a barrel means that has at a rear end side portion thereof a feed inlet means for supplying into it a material to be injection moulded and that is formed with a bore contoured in the form of a rotary body, an injection cylinder means that is so arranged as to extend from a forward end of the said barrel means coaxially therewith and that is formed with an outlet nozzle means at a forward end portion thereof, a screw means that is adapted to be in an abutting engagement with the said bore of the said barrel means and retained in the said bore so as to be capable of an axial rotation therein and that is formed with a screw channel means on a side peripheral surface thereof, and an injection plunger means that is adapted to be incorporated slidably in the said screw means and to be disposed coaxially therewith and that has a forward end portion which is capable of an advance and retreat movement into and out of the said injection cylinder means, characterized in that: the said bore in the said barrel means and the said screw means adapted to be in the abutting engagement therewith are each configured so as to be contoured in the form of a rotary body which is reduced in diameter towards a forward end thereof, and the said screw channel means is so configured that an angle of inclination of a generatrix passing through a succession of ridge portions thereof may not be identical to an angle of inclination of a generatrix passing through a succession of valley portions thereof.

In accordance with a second methodical aspect of the present invention, a plasticizing and injection method for an injection moulding machine is characterized in that: the the said bore in the said barrel means and the said screw means adapted to be in the abutting engagement therewith are each configured so as to be contoured in a conical or truncated conical form which is reduced in diameter towards a forward end thereof, and the said screw channel means is so configured that an angle of inclination of a generatrix passing through a succession of ridge portions thereof may not be identical to an angle of inclination of a generatrix passing through a succession of valley portions thereof.

In accordance with a third methodical aspect of the present invention, a plasticizing and injection method for an injection moulding machine is characterized in that: the said bore in the said barrel means and the said screw means adapted to be in the abutting engagement therewith are each configured so as to be contoured in the form of a rotary body which is reduced in diameter towards a forward end thereof, and the said screw channel means is so configured that an angle of inclination of a generatrix passing through a succession of valley portions thereof may be constituted by a combination of not less than two varied angles of inclination and that the said angles may be set in a stepwise manner from a given generatrix position.

In accordance with a fourth methodical aspect of the present invention, a plasticizing and injection method for an injection moulding machine is characterized in that: the said bore in the said barrel means and the said screw means adapted to be in the abutting engagement therewith are each configured so as to be contoured in the form of a rotary body which is reduced in diameter towards a forward end thereof, the said screw channel means is so configured that an angle of inclination of a generatrix passing through a succession of ridge portions thereof may be constituted by a combination of not less than two varied angles of inclination and that the said angles of inclination may be set in a stepwise manner from a given generatrix position, and the said bore in the said barrel means is configured to be in an abutting engagement with the said screw means so as to conform to the said varied angles of inclination.

In accordance with a fifth methodical aspect of the present invention, a plasticizing and injection method for an injection moulding machine is characterized in that: the the said bore in the said barrel means and the said screw means adapted to be in the abutting engagement therewith are each configured to have a rotary paraboloidal surface.

In accordance with a sixth methodical aspect of the present invention, a plasticizing and injection method for an injection moulding machine is characterized in that: the the said bore in the said barrel means and the said screw means adapted to be in the abutting engagement therewith are each configured to have a rotary hyperbloidal surface.

The present invention also provides a product that is made in accodance with any of plasticizing and injection moulding methods as set forth above.

In accordance with a still further aspect of the present invention, there is provided an injection moulding machine which incorporates any of plasticizing and injection mechanisms as set forth above.

The present invention will better be understood from the following detailed description and the drawings attached hereto showing certain illustrative embodiments of the present invention. In this connection, it should be noted that such embodiments as illustrated in the accompanying drawings are intended in no way to limit the present invention, but to facilitate an explanation and understanding thereof.

In the accompanying drawings:
Fig. 1 is a cross sectional view, partly cut away, of the entire system of a certain embodiment of the present invention;
Fig. 2 is a diagrammatic view illustrating a force of action against the wall of a barrel bore in the present invention;
Fig. 3 is a diagrammatic view illustrating a certain embodiment of the present invention in which different angles of inclination are employed.
Fig. 4 is a diagrammatic view illustrating another embodiment of the present invention in which different angles of inclination are employed;
Fig. 5 is a diagrammatic view illustrating a further embodiment of the present invention in which different angles of inclination are employed;
Fig. 6 is a diagrammatic view illustrating yet another embodiment of the present invention in which different angles of inclination are employed; and
Fig. 7 is a cross sectional view, partly cut away, of the entire system of a conventional injection molding machine.

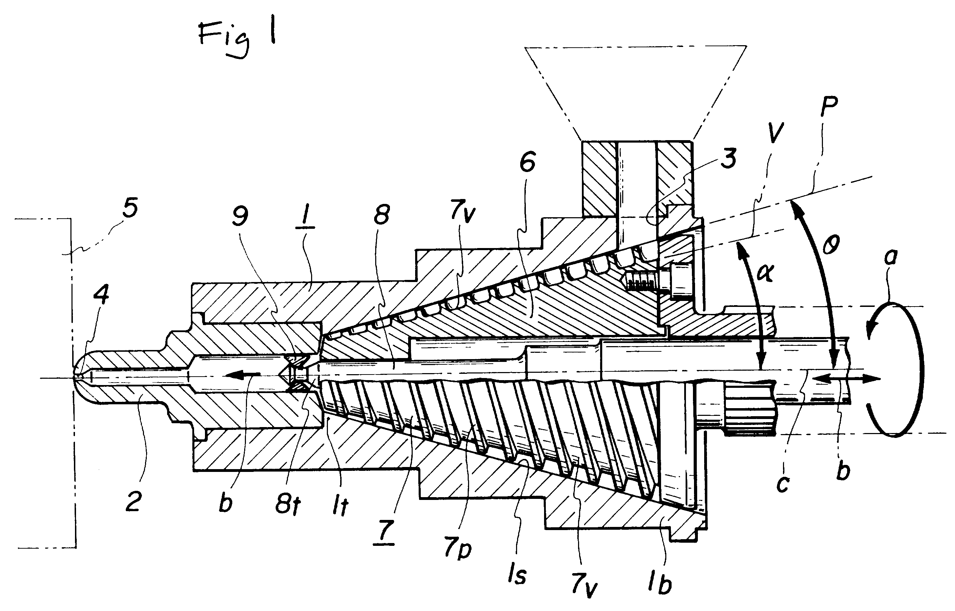

With respect to certain exemplary embodiments of the present invention that may be constructed as mentioned above, an explanation will now be given in detail with reference to the accompanying drawings. Fig. 1 is a cross sectional view, partly cut away, of the entire system of a principal embodiment.

Compared with the prior art mentioned above, the present invention has an eminent, distinctive feature with respect to the configuration that should and can be taken of the bore within the barrel as well as the screw therein.

A barrel 1 is formed with a bore 1s in a straight conical form that is reduced in diameter in the direction of a forward end (that is, at the upper, left hand side as shown). At its forward end portion 1t, an injection cylinder 2 is provided to communicate with the bore 1s and securely and coaxially coupled thereto. Also, the barrel 1 is provided at its rear end side portion 1b with a feed inlet 3 which communicates with the bore 1s for supplying into it an injection mouldable material in a solid and particulate or granular form which can consist of a resinous material, or a ceramic powder or a metallic powder admixed therewith. The said feed inlet 3 is typically coupled with a hopper or the like.

The injection cylinder 2 is detachably fastened to the barrel 1 and has its forward end portion that is formed with an outlet nozzle 4 which in turn is coupled to, and placed in an abutting engagement with, an injection port for a forming mould 5 in an assembly constructed as shown.

It then follows that the screw 6 is configured to be in a straight conical form that is designed to conform to the bore 1s of the above mentioned barrel 1, and is held at a fixed position in the barrel bore 1s so as to be axially rotatable in the direction of the arrow a shown by means of a rotary drive mechanism (not shown). And, it should be noted that the screw 6 is formed on its side peripheral surface with a screw channel 7 which is spirally formed towards its forward end and whose successive ridge portions 7p are disposed substantially in contact with the wall surface 1w of the bore 1s.

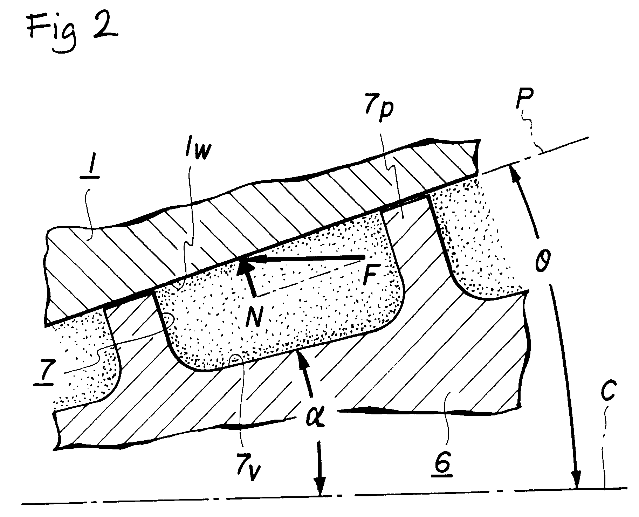

By being configured in this way to be in a conical or truncated conical form (which can otherwise be termed "straight conical or truncated conical form") that is in the form of a rotary body which is reduced in diameter towards its forward end 1t, it is seen that the wall surface 1w of the bore 1s of the barrel 1 has its generatrix P which is inclined with a predetermined angle of inclination θ relative to the axis of rotation C. The angle 2θ (and 2 α later seen) may each hereinafter be referred to as "taper angle". It is apparent that as shown in Fig. 2, a component F of the force of action that is produced by the rotation of the screw 6, in a direction parallel to the direction of the rotary axis C will act as a reaction N in a direction that is perpendicular to the wall surface 1w. It therefore follows that this reactive force N will act to increase the above mentioned force of friction for the barrel Tb.

As will be seen, this is coincident to the fact that in the above mentioned relationship that [the force of friction for the barrel Tb] is more than [the force of friction for the screw Ts], the greater the force of friction for the barrel Tb, the better will be the result. Hence, a greater force of conveyance is here obtained.

In connection with the above, it should be noted that the term "generatrix" is intended to mean a line on a plane when this line is revolved about another line on the same plane as its axis to draw a rotary body.

It follows next that in the construction of the above mentioned screw channel 7 whose configuration is a distinct feature of the present invention, it is established that an angle of inclination θ of the generatrix P which passes through a succession of ridge portions 7p thereof (the angle θ being coincident with an angle of inclination θ of the barrel bore wall 1w) relative to the axis C is not identical to an angle of inclination α of the generatrix V which passes through a succession of valley portions 7v thereof. In the present embodiment shown in Fig. 1, it is established that the angle θ is more than the angle α.

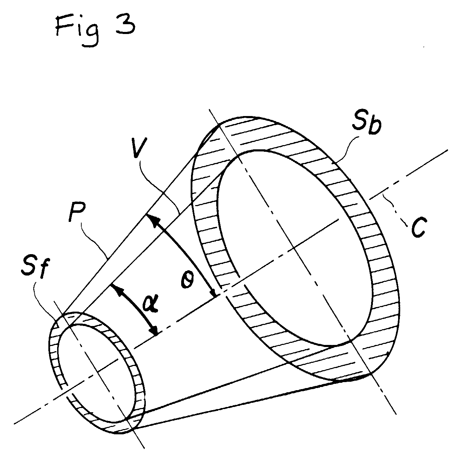

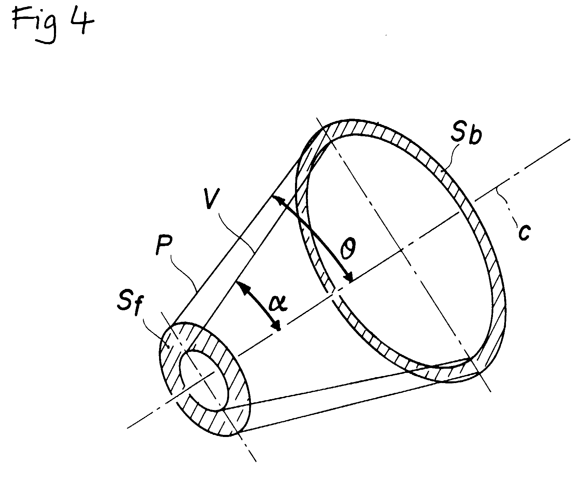

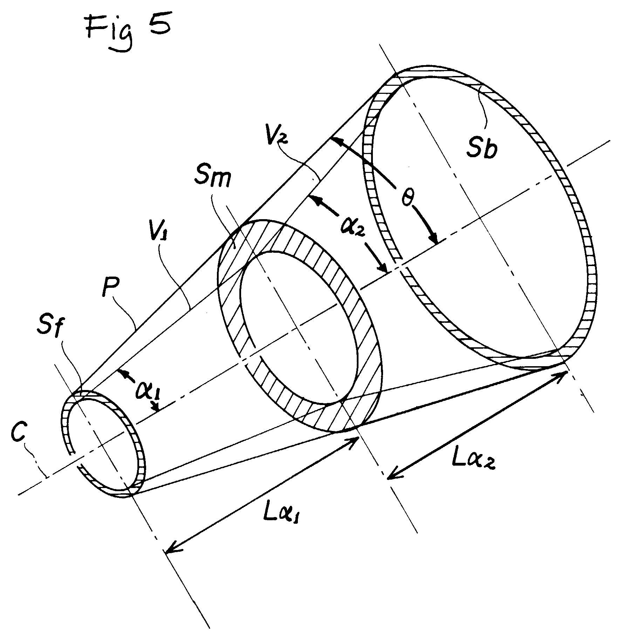

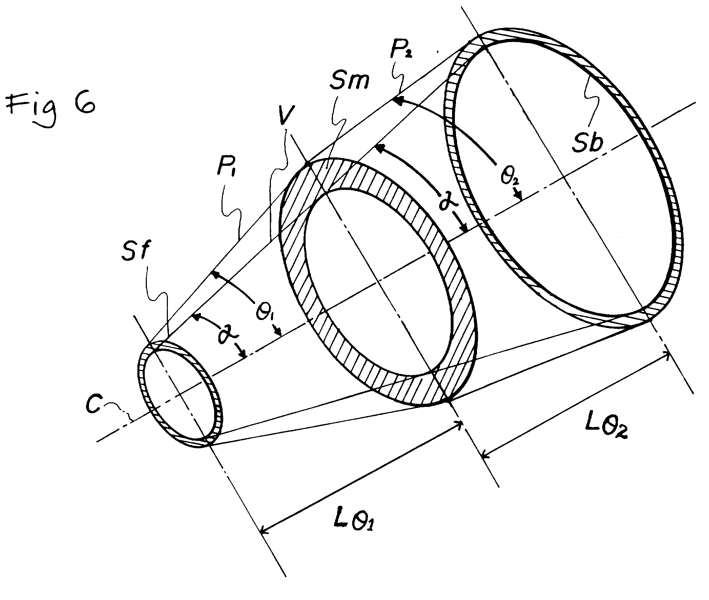

The establishment of these individual angles should be in accord with a desired specification of the mechanism. Thus, as shown in Figs. 3, 4, 5 and 6, it can adequately be set that the angle θ is less than the angle α (Fig. 3), or that the angle θ is more than the angle α (Fig. 4), or that not less than two different angles of inclination α 1, α 2, α 3, ... in a combination are formed in a stepwise manner (Fig. 5), or that not less than two different angles of inclination θ1, θ2, θ3, ... in a combination are formed in a stepwise manner (Fig. 6).

First of all, in case where the angle θ is set to be less than the angle α (see Fig. 3), it will be seen that for the cross sectional area S that is formed by the wall surface 1w of the barrel bore 1s and a valley portion 7v of the screw channel 7 in a cross section perpendicular to the axis of rotation C (which area is hereinafter simply referred to as "conveyance cross sectional area"), the conveyance cross sectional area Sb at the rear end portion and the conveyance cross sectional area Sf at the forward end portion can still be made identical to each other.

In such a mechanism, it can be noted that an injection mouldable material which has been loaded will, without materially receiving any compressive force, be simply displaced by means of the action of the screw 6 and melted by means of the external heating. Typically, however, where the screw 6 and the barrel bore 1s are each in a conical form in which the conveyance cross sectional area S is reduced towards its forward end, it can be seen that the injection mouldable material will be under a compressive force while being placed in a molten state. Thus, it will be subjected to a mixing action under a compression (which action can be referred to as "kneading"). At the same time, a frictional heat would have been generated under a shearing action arising from a molecular deformation of the molten material.

In case where a compressive force is not acted upon as mentioned above, however, it will be apparent that since only a "mixing" action coupled with a "conveyance" is carried out for the material without being subjected to a "kneading" action, a highly favourable result can be achieved in that where such an injection mouldable material is employed as including a ceramic powder, a metallic powder or the like, only a wax as their binder material can be melted (by the external heating means) and mixed therewith. Furthermore, where a thermoset resin as well as a material that tends to be deteriorated by a shearing heat generated (for example, a PVC resin) is employed, the above mentioned construction can be made highly effective.

Next, in case where the angle θ is set to be more than the angle α (see Fig. 4), it will be seen that since the difference between the conveyance cross sectional area Sb at the rear end portion and the conveyance cross sectional area Sf at the forward end portion is made greater, a greater force of compression can be generated. Thus, where a resinous material, such as an oil containing resin, which has a good sliding property, is employed, this arrangement will be effective to obtain a force of conveyance and a kneading action which are with a greater certainty.

Also, it should be noted that the fact that the conveyance cross sectional area Sb at the rear end portion can be made greater means that a valley portion 7v of the screw channel 7 can be deepenned with a greater extent. By virtue of this fact, the advantage does result that if the barrel 1 and the screw 6 are to be small sized, an injection mouldable material that is of a conventional size of particles or granulation can, as it is, be employed. In this conjunction, it can be taken into account that with a conventional cylindrical screw and barrel, the depth of the screw channel at the solid transportation section must be made shallow in proportion to the screw diameter in a functional design consideration and that with a diameter of the screw that is not greater than 25 mm, the material must have a particularly reduced size of particles or granulation.

Furthermore, it should be noted that for a succession of valleys 7v of the screw channel 7, not less than two varied angles of inclination (α 1, α 2, α 3, ...) may be formed in a combination. In an embodiment of the present invention as shown in Fig. 5, they may be set in a stepwise manner from a given generatrix position. For example, as shown in this Figure, the taper angle 2α 1 from the forward end portion to an intermediate portion and the taper angle 2α 2 from the intermediate portion to the rear end portion can be varied in a stepwise manner such as to meet the relationship that the angle α 2 is greater than the angle θ which in turn is greater than the angle α 1. In addition, the respective conveyance cross sectional areas Sf, Sm and Sb at the forward end portion, the intermediate portion and the rear end portion can be set so as to meet the relationship that with the angle θ being equal to 15 degrees, the ratio Sb/Sm is equal to 1.1 and the ratio Sm/Sf is equal to 8 with the proviso that the distance (Lα 1) extending from the forward end portion to the intermediate portion is equal to the distance (Lα 2) extending from the intermediate portion to the rear end portion.

By variously changing the combination of Sm≦Sb (α 2≧ θ ), Sf≦ Sm (α 1≧ α 2) and Lα 1≧ Lα 2 that are set above, it can be seen that a mixing action coupled with a conveyance and a kneading action in the course of displacement of the screw 6 can variously be set. More specifically, the process can be carried out in such a manner that a compressive force may be restrained until an injection mouldable material that is a solid matter is softened and melted, and that the compressive force may then be increased after it is completely melted to perform the kneading action efficiently. Thus, the arrangement is extremely suitable for a non-crystalline resin that has a high viscosity at the time when it is softened. And, such an arrangement when adopted can be applied to a wide variety of injection mouldable materials and can be made highly versatile.

While the above mentioned embodiment of the present invention has adopted the relationship that the angle α 2 is greater than the angle θ which in turn is greater than the angle α1, it may be altered to satisfy the relationship that the angle α1 is greater than the angle θ which in turn is greater than the angle α2. By doing so, the arrangement can be applied to a moulding operation in which not less than two mixed materials are melted and thereafter are moulded without having undergone a complete mixture thereof, for example, in a design purpose moulding operation which is intended to give rise to a striped pattern of two or more colours.

Furthermore, it should be noted that unlike the above mentioned embodiment, the successive ridge portions 7p of the screw channel 7 of the screw 6 can be so formed that not less than two different angles of inclination (θ1, θ2, θ3, ...) may exist in a combination.

More specifically, in an alternative embodiment as shown in Fig. 6, an angle θ1 of inclination from the forward end portion to an intermediate portion and a different angle of inclination θ2 from the intermediate portion to the rear end portion are set in a stepwise manner so as to satisfy the relationship that the angle θ1 is greater than the angle α which in turn is greater than the angle θ 2. And, the respective cross sectional areas Sf, Sm and Sb at the forward end portion, the intermediate portion and the rear end portion are set so as to satisfy the relationship that with the angle α being equal to 15 degrees, the ratio Sb/Sm is equal to 1.1 and the ratio Sm/Sf is equal to 8 with the proviso that the distance (Lθ1) extending from the forward end portion to the intermediate portion is equal to the distance (Lθ 2) extending from the intermediate portion to the rear end portion. At the same time, the bore 1s of the barrel 1 is so formed as to have two stepped angles θ1 and θ 2 of inclination to conform to the above mentioned two stepped angles θ 1 and θ 2.

With such a setting, too, it will be apparent that similar features and effects to those mentioned in connection with Fig. 5 can be obtained. In case where the angle θ2 is greater than the angle α which in turn is greater than the angle θ1, it should be seen that the arrangement is suitable for an operation in which a resinous material having a greater size of particles or granulation or the like, after it has been kneaded for a short period of time at a position of approximately Lθ 2, is slowly mixed and conveyed only under the external heating.

It may further be noted here that it is easier and hence more effective to machine the ridge portions 7p of the screw 6 than to machine the valley portions 7v thereof.

While in the above mentioned various embodiments, explanations have been given with respect to the taper angles which are set to be two stepped, it may be unnecessary to note that they may be set to be three or more stepped.

What follows is the fact that as in the prior art, an injection plunger 8 is slidably incorporated into the screw 6 coaxially therewith. The injection plunger 8 is so constructed that it may be exposed from the forward end portion of the screw 6 and may perform an advance and retreat movement in the direction of the arrow b shown in the previously mentioned injection cylinder 2 by means of a sliding drive mechanism (not shown). And, its forward end 8t is provided with a check valve 9 that is designed to prevent the resinous material when injection moulded from reversely flowing. In this connection, it should be noted that the check valve 9 is a member which has typically been employed in a conventional injection moulding machine of in-line screw type and hence its details are omitted here.

While in the various embodiments of the present invention set forth in the foregoing, the inner contour of the bore 1s of the barrel 1 and the outer contour of the screw 6 are used with each being configured to be in the form of a rotary body of straight conical (or truncated conical) shape, it should be noted that they may each be configured to be in any other form of such rotary bodies as having, e. g., a rotary paraboloidal surface and a rotary hyperbloidal surface, each reduced in diameter forwards.

It should further be noted that the rotary drive mechanism and the sliding drive mechanism mentioned above may be of any of conventional designs and hence their details are omitted here.

By virtue of the fact that the present invention is so constructed as mentioned in the foregoing, it should be noted that a molten material can be conveyed with a conical barrel screw into an injection cylinder with certainty and without undergoing a slippage. At the same time, since the taper angle (2θ ) over the successive screw ridge portions and the taper angle (2α) over the successive screw valley portions are set not to be identical to each other, it is possible to make the conveyance cross sectional areas identical or to enlarge their difference.

Accordingly, it will be apparent that a variety of materials including a ceramic powder and a metallic powder which are not suitable for compression and a material which tends to be deteriorated when subjected to a shearing heat generated can properly be acted upon for injection moulding. Also, in addition to the effect that a compressive force can much be enlarged, it will be apparent that if the machine is to be small sized, the depth of the screw channel at the position of a feed inlet for supplying a raw material into it can still be enlarged and as a consequence the material of a conventional size of particles or granulation can as it is be utilized, a fact that constitutes an additional effect of the present invention.

Furthermore, in case where the screw and the barrel bore are each configured to have a rotary paraboloidal surface and a rotary hyperbloidal surface, it should be noted that in the vicinity of the forward end portion of the screw and in the vicinity of the rear end portion thereof, the plasiticizing and kneading actions can be carried out in which the compressive force and the conveyance force are varied and that as a result a raw material composed of a mixture of materials having different properties can be acted upon properly for injection molding, a fact that constitutes a further effect of the present invention.

Still further, it should also be noted that by varying not less than two varied taper angles in a combination in a stepwise manner along the successive valley portions as well as the successive ridge portions of the screw, the compressive force at a given position can be varied and as a consequence a combined action of mixing and conveyance and a kneading action can selectively be established for a given course of displacement of the screw channel, a fact that constitutes yet a further effect of the present invention.

While the present invention has hereinbefore been described with respect to certain illustrative embodiments thereof, it will readily be appreciated by a person skilled in the art to be obvious that many alterations thereof, omissions therefrom and additions thereto can be made without departing from the essence and the scope of the present invention. Accordingly, it should be understood that the present invention is not limited to the specific embodiments thereof set out above, but includes all possible embodiments thereof that can be made within the scope with respect to the features specifically set forth in the appended claims and encompasses all equivalents thereof.

## Claims

1. A plasticizing and injecting mechanism for an injection moulding machine, which comprises:
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured so as to be contoured in the form of a rotary body which is reduced in diameter towards a forward end thereof, and
said screw channel means is so configured that an angle of inclination of a generatrix passing through a succession of ridge portions thereof may not be identical to an angle of inclination of a generatrix passing through a succession of valley portions thereof.

2. A plasticizing and injecting mechanism for an injection moulding machine, which comprises:
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured so as to be contoured in a conical or truncated conical form which is reduced in diameter towards a forward end thereof, and
said screw channel means is so configured that an angle of inclination of a generatrix passing through a succession of ridge portions thereof may not be identical to an angle of inclination of a generatrix passing through a succession of valley portions thereof.

3. A plasticizing and injecting mechanism for an injection moulding machine, which comprises:
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder,
characterized in that
said bore in said barrel means and said screw means adapted to be in the abutting engagement therewith are each configured so as to be contoured in the form of a rotary body which is reduced in diameter towards a forward end thereof, and
said screw channel means is so configured that an angle of inclination at a generatrix passing through a succession of valley portions thereof may be constituted by a combination of not less than two varied angles of inclination and that said varied angles may be set in a stepwise manner from a given generatrix position.

4. A plasticizing and injecting mechanism for an injection moulding machine, which comprises:
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured so as to be contoured in the form of a rotary body which is reduced in diameter towards a forward end thereof,
said screw channel means is so configured that an angle of inclination of a generatrix passing through a succession of ridge portions thereof may be constituted by a combination of not less than two varied angles of inclination and that said varied angles may be set in a stepwise manner from a given generatrix position, and
said bore of said barrel means is configured to be in an abutting engagement with said screw means so as to conform to said varied angles of inclination.

5. A plasticizing and injecting mechanism for an injection moulding machine, which comprises:
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw adapted to be in the abutting engagement therewith are each configured to have a rotary paraboloidal surface.

6. A plasticizing and injecting mechanism in an injection moulding machine, which comprises:
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured to have a rotary hyperbloidal surface.

7. A plasticizing and injection method for an injection moulding machine,
in which there are provided
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured so as to be contoured in the form of a rotary body which is reduced in diameter towards a forward end thereof, and
said screw channel means is so configured that an angle of inclination of a generatrix passing through a succession of ridge portions thereof may not be identical to an angle of inclination of a generatrix passing through a succession of valley portions thereof.

8. A plasticizing and injection method for an injection moulding machine,
in which there are provided
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured so as to be contoured in a conical or truncated conical form which is reduced in diameter towards a forward end thereof, and
said screw channel means is so configured that an angle of inclination of a generatrix passing through a succession of ridge portions thereof may not be identical to an angle of inclination of a generatrix passing through a succession of valley portions thereof.

9. A plasticizing and injection method for an injection moulding machine,
in which there are provided
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured so as to be contoured in the form of a rotary body which is reduced in diameter towards a forward end thereof, and
said screw channel means is so configured that an angle of inclination of a generatrix passing through a succession of valley portions thereof may be constituted by a combination of not less than two varied angles of inclination and that said varied angles may be set in a stepwise manner from a given generatrix position.

10. A plasticizing and injection method in an injection moulding machine,
in which there are provided
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured so as to be contoured in the form of a rotary body which is reduced in diameter towards a forward end thereof,
said screw channel means is so configured that an angle of inclination of a generatrix passing through a succession of ridge portions thereof may be constituted by a combination of not less than two varied angles of inclination and that said varied angles may be set in a stepwise manner from a given generatrix position, and
said bore in said barrel means is configured to be in an abutting engagement with said screw so as to conform to said varied angles of inclination.

11. A plasticizing and injection method in an injection moulding machine,
in which there are provided
a barrel means that has at a rear end side portion hereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured to have a rotary paraboloidal surface.

12. A plasticizing and injection method in an injection moulding machine,
in which there are provided
a barrel means that has at a rear end side portion thereof a feed inlet means for supplying into it a material to be injection moulded and that is formed with a bore contoured in the form of a rotary body,
an injection cylinder means that is so arranged as to extend from a forward end of said barrel means coaxially therewith and that is formed with an outlet nozzle means at a forward end portion thereof,
a screw means that is adapted to be in an abutting engagement with said bore of said barrel means and retained in said bore so as to be capable of an axial rotation therein and that is formed with a screw channel means on a side peripheral surface thereof, and
an injection plunger means that is adapted to be incorporated slidably in said screw means and to be disposed coaxially therewith and that has a forward end portion which is capable of an advance and retreat movement into and out of said injection cylinder means,
characterized in that
said bore in said barrel means and said screw means adapted to be in the abutting engagement therewith are each configured to have a rotary hyperbloidal surface.

13. A product that is made in accordance with a plasticizing and injecting method as set forth in any one of claims 7-12.

14. An injection moulding machine that incorporates a plasticizing and injecting mechanism as set forth in any one of claims 1-6.
